Europäisches Patentamt

European Patent Office

Office européen des brevets

(19)

(11) Numéro de publication : **0 397 545 B1**

(12) **FASCICULE DE BREVET EUROPEEN**

(45) Date de publication du fascicule du brevet :
**27.07.94 Bulletin 94/30**

(51) Int. Cl.$^5$ : **G02F 1/37**, G02F 1/35, G11B 7/24

(21) Numéro de dépôt : **90401185.5**

(22) Date de dépôt : **02.05.90**

(54) **Procédé et structure permettant la génération d'effets électrooptiques non linéaires.**

(30) Priorité : **10.05.89 FR 8906103**

(43) Date de publication de la demande :
**14.11.90 Bulletin 90/46**

(45) Mention de la délivrance du brevet :
**27.07.94 Bulletin 94/30**

(84) Etats contractants désignés :
**BE DE ES GB NL**

(56) Documents cités :
**EP-A- 0 295 145
US-A- 3 665 206
PROCEEDINGS OF SPIE - THE INTERNATIO-
NAL SOCIETY FOR OPTICAL ENGINEERING,
San Diego, CA, 21-22 août 1986, vol. 682 :
"Molecular and Polymeric Optoelectronic
Materials : Fundamentals and Applications",
The International Society for Optical Engineering, Bellingham, Washington, US ; R. KAS-
HYAP : "Nonlinear optical interactions in
devices with cylindrical geometry".
APPLIED OPTICS, vol. 14, no. 6, juin 1975, p.
1447-1451 ; C.G. BETHEA : "Experimental
technique of dc induced SHG in liquids : measurement of the nonlinearity of CH2I2"
ELECTRONICS LETTERS, vol. 23, no. 13, juin
1987, p. 700-701 ; J.R. HILL et al. : "Efficient
frequency-doubling in a poled PVDF copolymer guest/host composite"**

(73) Titulaire : **THOMSON-CSF
173, Boulevard Haussmann
F-75008 Paris (FR)**

(72) Inventeur : **Robin, Philippe
THOMSON-CSF
SCPI
Cédex 67
F-92045 Paris la Défense (FR)**
Inventeur : **Chastaing, Evelyne
THOMSON-CSF
SCPI
Cédex 67
F-92045 Paris la Défense (FR)**
Inventeur : **Broussoux, Dominique
THOMSON-CSF
SCPI
Cédex 67
F-92045 Paris la Défense (FR)**

(74) Mandataire : **Guérin, Michel et al
THOMSON-CSF
SCPI
B.P. 329
50, rue Jean-Pierre Timbaud
F-92402 Courbevoie Cédex (FR)**

## Description

La présente invention concerne un procédé permettant d'obtenir un signal lumineux représentant le second harmonique d'un faisceau lumineux incident à une structure génératrice d'effets électrooptiques non linéaires. Elle concerne également une structure mettant en oeuvre ce procédé.

Depuis le développement des sources lumineuses intenses fournies par les lasers, les effets électrooptiques ont été mis en application dans beaucoup de domaines tels que les télécommunications optiques et le traitement optique des signaux. Les effets électrooptiques sont induits dans des matériaux diélectriques (c'est-à-dire des corps transparents à une onde électromagnétique) par l'application de champs électriques. Ces champs électriques peuvent être ceux associés à des faisceaux lumineux incidents sur le matériau diélectrique. L'indice de réfraction du matériau diélectrique transparent devient alors fonction de l'intensité du ou des faisceaux incidents, ce qui ouvre le domaine de l'optique non linéaire (génération d'harmoniques, transposition de fréquence, mémoires optiques, etc...)

Lorsqu'un champ électrique $\vec{E}$ est appliqué à un diélectrique, les particules chargées électriquement et qui forment la matière du diélectrique (électrons, atomes ionisés) se trouvent écartés de leur position d'équilibre d'une distance qui est fonction à la fois de l'intensité du champ $\vec{E}$, des forces électrostatiques de rappel auxquelles ces particules se trouvent soumises, de la fréquence du champ électrique appliqué et de l'arrangement des molécules du diélectrique. Il en résulte une polarisation de la matière que l'on note par le vecteur $\vec{P}$ et qui est égale par définition au produit de la densité des charges déplacées par le vecteur représentatif de ce déplacement. Entre le champ électrique $\vec{E}$ et le vecteur de polarisation lié à la matière $\vec{P}$, il existe une relation matricielle de la forme

$$\vec{P} = ||\chi||.\vec{E}$$

si l'intensité du champ électrique appliqué n'est pas trop élevée. Si le milieu est isotrope, $||\chi||$ se réduit à un scalaire. Dans le cas général des milieux anisotropes, $||\chi||$ est un tenseur.

Cependant, si on applique au diélectrique un champ électromagnétique intense, de fréquence optique, la polarisation induite n'est plus proportionnelle au champ optique appliqué, mais présente des termes non linéaires proportionnels au carré et au cube des champs appliqués. L'ensemble des effets produits pour ces polarisations non linéaires a été très étudié depuis la découverte par FRANKEN de la génération de second harmonique par un cristal de quartz soumis au rayonnement d'un laser à rubis (P.A. FRANKEN, A.E. HILL, C.W. PETERS, G. WEIMREICH, Phys. Rev. Lett., Vol. 7, 1961, p. 118).

On peut décrire la réponse d'un milieu à l'application d'un champ électromagnétique par le développement de la polarisation induite en série entière du champ électrique appliqué :

$$\vec{P} = P_0 + ||\chi^{(1)}||.\vec{E} + ||\chi^{(2)}||.|E|.\vec{E} \quad ||\chi^{(3)}||.|E|^2.\vec{E} + ...$$

$P_0$ étant différent de zéro si le diélectrique est un matériau ferroélectrique.

Le premier terme de ce développement de la polarisation induite représente la polarisation linéaire, alors que le énième terme traduit la réponse non linéaire du énième ordre du milieu au champ appliqué. Les coefficients $\chi^{(n)}$ sont des tenseurs d'ordre $(n+1)$ qu'on appelle tenseurs de susceptibilité non linéaire du énième ordre. Les différents termes contenus dans $\vec{P}$ décroissent très vite avec l'ordre n et ce n'est qu'avec l'apparition des sources lumineuses intenses que représentent les faisceaux lasers qu'on a pu exploiter les effets électrooptiques non linéaires correspondant à la susceptibilité d'ordre 2.

Pour certains diélectriques et sous certaines conditions, une polarisation induite par un faisceau lumineux incident et correspondant à une quantité d'énergie emmagasinée, donne lieu au rayonnement d'une onde oscillant à une fréquence double de celle du faisceau lumineux incident, ce qui correspond à la restitution d'une partie de l'énergie emmagasinée.

L'une des conditions nécessaires pour qu'un diélectrique quelconque puisse générer, par effet non linéaire, une onde représentant le second harmonique d'un faisceau lumineux incident, est que son tenseur susceptibilité d'ordre 2 soit différent de zéro. Les tenseurs $\chi^{(n)}$ étant définis à partir des propriétés des cristaux, on peut fortement restreindre le nombre de coefficients indépendants des tenseurs $\chi^{(n)}$ à $3^{n+1}$ composantes en utilisant les propriétés de symétrie du milieu. C'est ainsi que $\chi^{(2)}$ ne sera différent de zéro que dans des milieux non centrosymétriques. Ceci exclut donc tous les milieux amorphes (verres, polymères classiques) qui sont couramment utilisés en optique des couches minces.

Actuellement, les matériaux les plus couramment utilisés pour obtenir le phénomène de génération de seconde harmonique en optique non linéaire sont des monocristaux minéraux comme le niobate de lithium ou le dihydrogénophosphate de potassium (KDP). Cependant, les composés organiques possèdent dans ce domaine un certain nombre d'avantages sur les sels minéraux. En effet, aux fréquences relevant du domaine de l'optique, les effets non linéaires auxquels ils donnent naissance sont d'origine purement électronique, ce qui conduit à une réponse quasi instantanée de ces matériaux et les qualifie pour des applications dans le domaine du traitement ultra-rapide du signal optique. D'autre part, ils ont un seuil de dommage optique (encore désigné sous le terme de photoréfringence) plus élevé. Enfin, ils offrent un potentiel énorme en ingénierie moléculaire, permettant d'obtenir des matériaux possédant de plus grandes susceptibilités du second ordre.

Les matériaux organiques à fonction optique (doubleur de fréquence, effet Pockels, oscillateur paramétrique, mélangeur optique) peuvent être obtenus avec différents types de matériaux et par différentes techniques de mise en oeuvre.

Un type de structure ordonnée de molécules organiques possédant une réponse non linéaire très grande et capables de générer la seconde harmonique d'une onde électromagnétique est constitué par des polymères. Les films de polymère sont particulièrement intéressants puisqu'ils peuvent être appliqués sur de très grandes surfaces (par rapport à la taille des monocristaux) et sur des substrats de nature variée. Enfin, ils peuvent être produits beaucoup plus rapidement que les monocristaux et pour un faible coût.

Par analogie avec la formule donnée plus haut et donnant le développement de la polarisation induite en série entière du champ électrique, on a au niveau moléculaire :

$$\mu = \mu_o + \alpha.E_l + \beta.E_l^2 + \gamma.E_l^3$$

$\mu$ étant le moment dipolaire de la molécule et $E_l$ le champ électrique local subi par la molécule.

La plupart (environ 80 %) des molécules organiques connues pour leur fort coefficient de non-linéarité cristallisent dans un système centro-symétrique, ce qui entraîne $\chi^{(2)} = 0$. Pour que ce terme soit différent de zéro, il faut orienter les molécules actives en optique non linéaire. Afin d'utiliser au mieux ces molécules, on les mélange dans des matrices polymères. On obtient des structures génératrices d'effets électrooptiques non linéaires de la manière suivante :

- d'abord, un champ électrique d'orientation des molécules actives est appliqué sur les structures à une température supérieure à la température de transition vitreuse Tg. Les molécules actives qui sont dispersées dans ce mélange s'orientent sous l'action du champ électrique E avec un facteur d'orientation égal à $\mu E/5kT$ (k étant la constante de Boltzmann et T la température absolue)
- ensuite, toujours sous champ électrique, on diminue la température jusqu'à une température inférieure à la température de transition vitreuse. Les mouvements des molécules actives se trouvent donc impossibles et on obtient alors une structure pour laquelle $\chi^{(2)}$ est proportionnelle à $A \beta \mu E/5kT$ (A étant le facteur de concentration volumique des molécules actives dans la matrice polymère).

L'inconvénient majeur de ces structures est l'obligation de passer par une phase haute température (supérieure à 100°C) pour pouvoir orienter les molécules actives, ce qui diminue le facteur d'orientation $\mu E/5kT$. D'autre part, les structures sont ensuite figées et ne peuvent donc plus être modifiées à température ordinaire.

Il est d'autre part connu d'utiliser un procédé permettant, à partir d'une structure génératrice d'effets électrooptiques non linéaires, d'obtenir un signal lumineux représentant le second harmonique d'un faisceau lumineux incident à la structure, consistant à polariser la structure par un champ électrique et à utiliser le coefficient moléculaire V, correspondant à la susceptibilité non linéaire du troisième ordre de molécules contenues dans la structure, pour recueillir un signal de second harmonique qui est proportionnel au triple du produit du coefficient moléculaire V par la valeur du champ électrique de polarisation ("Proceedings of SPIE", San Diego, 21-22 Août 1986, volume 682, pages 170-178).

L'invention quant à elle consiste à utiliser un diélectrique présentant un champ électrique interne capable de créer un second harmonique à partir de molécules possédant une susceptibilité non linéaire d'ordre 3.

L'invention a donc pour objet un procédé permettant, à partir d'une structure génératrice d'effets électrooptiques non linéaires, d'obtenir un signal lumineux représentant le second harmonique d'un faisceau lumineux incident à la structure, consistant à polariser la structure par un champ électrique et à utiliser le coefficient moléculaire $\gamma$, correspondant à la susceptibilité non linéaire du troisième ordre de molécules contenues dans la structure, pour recueillir un signal de second harmonique qui est proportionnel au triple du produit du coefficient moléculaire $\gamma$ par la valeur du champ électrique de polarisation, caractérisé en ce que le champ électrique de polarisation est un champ électrique interne à la structure.

L'invention a également pour objet une structure génératrice d'effets électrooptiques non linéaires, caractérisée en ce que la structure est centrosymétrique et qu'elle est formée d'un matériau composite compre-

EP 0 397 545 B1

nant un diélectrique à champ électrique interne rémanent, ce diélectrique servant de matrice à des molécules actives en optique non linéaire, et permettant d'obtenir un signal lumineux représentant le second harmonique d'un faisceau lumineux incident à la structure.

Cette structure originale se démarque des structures de l'art antérieur comprenant un diélectrique à champ électrique interne et des molécules actives en optique non linéaire mais qui sont non centrosymétriques (J.R. Hill, publié dans Electronics Letters, Vol. 23 (1987), p. 700-701) ou (EP-A-0 295 145), alors que la structure de l'invention est centrosymétrique.

L'invention a enfin pour objet une mémoire effaçable constituée par une telle structure.

L'invention sera mieux comprise et d'autres avantages apparaîtront à la lecture de la description qui va suivre, donnée à titre non limitatif.

Les molécules possédant des susceptibilités non linéaires d'ordre 3 ($\gamma$) élevées ont un terme de polarisation $\mu$ égal à $\gamma E_l^3$ ($E_l$ étant le champ électrique local subi par la molécule). Si un champ permanent $E_o$ est appliqué sur la molécule, le champ local vu par la molécule sous illumination est égal à $E_l = E_o + E$ où $E$ est le champ électrique associé à l'onde optique. La composante cubique de la polarisation moléculaire devient :

$$E_l^3 = (E_o + E)^3$$

soit en développant :

$$\gamma E_l^3 = \gamma E_o^3 + 3\gamma E_o^2 E + 3\gamma E_o E^2 + \gamma E^3$$

A partir d'une molécule possédant un coefficient $\gamma$, on crée de manière indirecte un coefficient du second ordre $\beta'$ égal à $3\gamma E_o$.

Ainsi, en appliquant un champ électrique de polarisation à une structure formée de molécules ou comprenant des molécules ou des groupements moléculaires possédant un coefficient $\gamma$ non nul, on crée indirectement dans la structure une susceptibilité du second ordre permettant la génération du second harmonique d'une onde lumineuse incidente à la structure.

L'invention permet donc de conférer à une structure de type centrosymétrique une susceptibilité d'ordre 2. Elle permet aussi d'ajouter, à une structure de type non-centrosymétrique possédant naturellement une susceptibilité d'ordre 2, un autre terme issu du coefficient $\gamma$. L'efficacité d'une telle structure s'en trouve donc accrue.

La valeur du coefficient $\gamma$ est en général très faible, mais la valeur du champ électrique de polarisation $E_o$ peut être très élevée. La seule limitation tient à la valeur de la rigidité diélectrique du matériau constituant la structure.

Il est avantageux, et c'est là l'un des avantages importants de l'invention d'utiliser pour réaliser la structure, un diélectrique à polarisation permanente (ferroélectrique, électret) qui génère naturellement un champ électrique interne à la structure. Ceci évite l'utilisation d'un générateur de tension et d'électrodes permettant d'appliquer le champ électrique sur la structure.

Les matériaux diélectriques utilisables pour réaliser la structure selon l'invention peuvent être très divers selon que l'on utilise ou non un diélectrique à polarisation permanente et selon que les molécules actives en optique non linéaire (ou les groupements moléculaires) sont des molécules constitutives du diélectrique ou qu'elle se trouvent mélangées dans le diélectrique.

Les matériaux organiques sont très intéressants pour réaliser des structures selon l'invention et en particulier les polymères.

A titre d'exemple, dans un polymère ferroélectrique du type copolymère de fluorure de vinylidène et de trifluoroéthylène P (VDF - TrFE) de proportions molaires 70 % de VDF pour 30 % de TrFE, on obtient un champ interne de polarisation égal à $10^8$ V/m. Les molécules de polydiacétylène possèdent un coefficient $\gamma$ égal à $1,4 \times 10^{-18}$ MKSA. Le coefficient $\beta'$ correspondant vaut alors $4,2 \times 10^{-10}$ m/V. Cette valeur est 100 fois plus élevée que la valeur du coefficient $\beta$ du niobate de lithium $LiNbO_3$. Elle est également beaucoup plus élevée que le coefficient $\chi^{(2)}$ (de 5 à $10 \times 10^{-12}$ m/V) d'une couche non dopée de copolymère ferroélectrique polyfluorure de vinylidène / trifluorure de vinylidène en proportions molaires 75/25.

On peut également utiliser comme matrice un matériau de type électret comme le polytétrafluoroéthylène qui peut, par implantation de charges, développer un champ électrique interne de $10^7$ à $10^8$ V/m.

Parmi les applications possibles de l'invention, l'une d'elles concerne le stockage et la lecture d'informations sur une couche organique à base de polymère ferroélectrique dopée par des molécules à coefficient $\gamma$ élevé. Le stockage peut se faire par adressage électrique ou par adressage optique. La lecture se fait par voie optique. L'effacement de l'information peut être faite, localement ou en totalité, par chauffage à une température supérieure à la température de Curie du polymère ferroélectrique. Dans le cas du stockage par adressage électrique, l'écriture se fait sur une structure non polarisée par polarisation locale obtenue par application locale d'un champ électrique de valeur supérieure au champ coercitif. Dans le cas du stockage par adressage

4

EP 0 397 545 B1

électrique, l'écriture se fait sur une structure préalablement polarisée par dépolarisation locale obtenue par chauffage local, au moyen d'un faisceau laser, à une température supérieure à la température de Curie. La lecture par voie optique se fait grâce à la génération de second harmonique de la lumière dans les parties polarisées de la structure. On obtient ainsi des mémoires ou des supports d'informations effaçables et à lecture optique.

**Revendications**

1. Procédé permettant, à partir d'une structure génératrice d'effets électrooptiques non linéaires, d'obtenir un signal lumineux représentant le second harmonique d'un faisceau lumineux incident à la structure, consistant à polariser la structure par un champ électrique et à utiliser le coefficient moléculaire $\gamma$, correspondant à la susceptibilité non linéaire du troisième ordre de molécules contenues dans la structure, pour recueillir un signal de second harmonique qui est proportionnel au triple du produit du coefficient moléculaire $\gamma$ par la valeur du champ électrique de polarisation, caractérisé en ce que le champ électrique de polarisation est un champ électrique interne à la structure .

2. Procédé selon la revendication 1, caractérisé en ce que le champ électrique de polarisation est un champ interne rémanent dû au caractère ferroélectrique de la structure.

3. Procédé selon la revendication 1, caractérisé en ce que le champ électrique de polarisation est un champ interne rémanent dû au fait que la structure constitue un électret.

4. Structure génératrice d'effets électrooptiques non linéaires, caractérisée en ce que la structure est centrosymétrique et qu'elle est formée d'un matériau composite comprenant un diélectrique à champ électrique interne rémanent, ce diélectrique servant de matrice à des molécules actives en optique non linéaire et permettant d'obtenir un signal lumineux représentant le second harmonique d'un faisceau lumineux incident à la structure.

5. Structure selon la revendication 4, caractérisée en ce que le diélectrique est ferroélectrique.

6. Structure selon la revendication 4, caractérisée en ce que le diélectrique est un électret.

7. Structure selon l'une des revendications 5 ou 6, caractérisée en ce que le diélectrique est un polymère.

8. Structure selon l'une quelconque des revendications 4 à 7, caractérisée en ce que les molécules actives en optique non linéaire sont des molécules de polydiacéthylène.

9. Mémoire effaçable, caractérisée en ce qu'elle est constituée par une structure selon la revendication 5.

**Patentansprüche**

1. Verfahren, das mit Hilfe einer Struktur zum Erzeugen nichtlinearer elektrooptischer Effekte ermöglicht, ein Lichtsignal zu erhalten, das die zweite Harmonische eines auf die Struktur auftreffenden Lichtstrahlenbündels repräsentiert, darin bestehend, daß die Struktur mittels eines elektrischen Feldes polarisiert wird und der Molekularkoeffizient $\gamma$ verwendet wird, der der nichtlinearen Suszeptibilität der dritten Ordnung der in der Struktur enthaltenen Moleküle entspricht, um ein Signal der zweiten Harmonischen zu erfassen, das dem Dreifachen des Produkts des molekularen Koeffizienten $\gamma$ mit dem Wert des elektrischen Polarisationsfeldes proportional ist, dadurch gekennzeichnet, daß das elektrische Polarisationsfeld ein elektrisches Feld im Inneren der Struktur ist.

2. Verfahren nach Anspruch 1, dadurch gekennzeichnet, daß das elektrische Polarisationsfeld ein auf den ferroelektrischen Charakter der Struktur zurückzuführendes remanentes internes Feld ist.

3. Verfahren nach Anspruch 1, dadurch gekennzeichnet, daß das elektrische Polarisationsfeld ein remanentes internes Feld ist, das auf die Tatsache zurückzuführen ist, daß die Struktur einen Elektret bildet.

**4.** Struktur zur Erzeugung nichtlinearer elektrooptischer Effekte, dadurch gekennzeichnet, daß die Struktur zentralsymmetrisch ist und daß sie aus einem zusammengesetzten Material gebildet ist, die ein Dielektrikum mit remanentem internen elektrischen Feld enthält, wobei dieses Dielektrikum als Matrix für in der nichtlinearen Optik aktive Moleküle dient und ermöglicht, ein Lichtsignal zu erhalten, das die zweite Harmonische eines auf die Struktur auftreffenden Lichtstrahlenbündels repräsentiert.

**5.** Struktur nach Anspruch 4, dadurch gekennzeichnet, daß das Dielektrikum ferroelektrisch ist.

**6.** Struktur nach Anspruch 4, dadurch gekennzeichnet, daß das Dielektrikum ein Elektret ist.

**7.** Struktur nach Anspruch 5 oder 6, dadurch gekennzeichnet, daß das Dielektrikum ein Polymer ist.

**8.** Struktur nach einem der Ansprüche 4 bis 7, dadurch gekennzeichnet, daß die in der nichtlinearen Optik aktiven Moleküle Polydiacethylen-Moleküle sind.

**9.** Löschbarer Speicher, dadurch gekennzeichnet, daß er durch eine Struktur gemäß Anspruch 5 gebildet ist.

## Claims

**1.** Process making it possible, starting from a structure which generates non-linear electrooptical effects, to obtain a light signal representing the second harmonic of a light beam incident on the structure, consisting in polarizing the structure with an electric field and in using the molecular coefficient $\gamma$, corresponding to the third-order non-linear susceptibility of molecules contained in the structure, in order to gather a second-harmonic signal which is proportional to three times the product of the molecular coefficient $\gamma$ times the value of the electric polarizing field, characterized in that the electric polarizing field is an electric field internal to the structure.

**2.** Process according to Claim 1, characterized in that the electric polarizing field is a remanent internal field due to the ferroelectric character of the structure.

**3.** Process according to Claim 1, characterized in that the electric polarizing field is a remanent internal field due to the fact that the structure constitutes an electret.

**4.** Structure which generates non-linear electro-optical effects, characterized in that the structure is centrosymmetric and is formed from a composite material comprising a dielectric having a remanent internal electric field, this dielectric serving as matrix for the molecules which are active in non-linear optics and making it possible to obtain a light signal representing the second harmonic of a light beam incident on the structure.

**5.** Structure according to Claim 4, characterized in that the dielectric is ferroelectric.

**6.** Structure according to Claim 4, characterized in that the dielectric is an electret.

**7.** Structure according to one of Claims 5 or 6, characterized in that the dielectric is a polymer.

**8.** Structure according to one of Claims 4 to 7, characterized in that the molecules which are active in non-linear optics are molecules of polydiacetylene.

**9.** Erasable memory, characterized in that it is constituted by a structure according to Claim 5.